(19) Europäisches Patentamt
European Patent Office
Office européen des brevets

(11) **EP 0 529 029 B1**

(12) **EUROPÄISCHE PATENTSCHRIFT**

(45) Veröffentlichungstag und Bekanntmachung des Hinweises auf die Patenterteilung:
**05.06.1996  Patentblatt 1996/23**

(51) Int Cl.[6]: **G01N 27/407**, G01N 27/417

(21) Anmeldenummer: **92905571.3**

(22) Anmeldetag: **05.03.1992**

(86) Internationale Anmeldenummer:
**PCT/EP92/00490**

(87) Internationale Veröffentlichungsnummer:
**WO 92/15872 (17.09.1992 Gazette 1992/24)**

(54) **GRENZSTROMSONDE ZUR MESSUNG DES PARTIALDRUCKS VON GASEN**

LIMITING-CURRENT PROBE FOR THE MEASUREMENT OF THE PARTIAL PRESSURE OF GASES

SONDE DE COURANT LIMITE POUR LA MESURE DE LA PRESSION PARTIELLE DES GAZ

(84) Benannte Vertragsstaaten:
**DE FR GB IT NL**

(30) Priorität: **07.03.1991  DE 4107217**

(43) Veröffentlichungstag der Anmeldung:
**03.03.1993  Patentblatt 1993/09**

(73) Patentinhaber: **ROTH-TECHNIK GMBH & Co.
Forschung für Automobil- und Umwelttechnik
D-76571 Gaggenau (DE)**

(72) Erfinder:
• **LEONHARD, Volker
D-6000 Frankfurt am Main 50 (DE)**
• **ERDMANN, Hartmut
D-6374 Steinbach (DE)**

• **ILGENSTEIN, Marianne
D-6237 Liederbach (DE)**
• **CHU, Wing, Fong
D-6000 Frankfurt am Main (DE)**

(74) Vertreter: **Säger, Manfred, Dipl.-Ing. et al
Patentanwälte
Säger & Partner
Postfach 81 08 09
D-81908 München (DE)**

(56) Entgegenhaltungen:
EP-A- 0 408 039          DE-A- 3 800 370
GB-A- 2 049 952          US-A- 4 844 788

• **Patent Abstracts of Japan, Band 10, Nr 278, P499, Zusammenfassung von JP 61-99855**

**Beschreibung**

Die Erfindung betrifft Grenzstromsonden zur Messung des Partialdrucks von Gasen gemäß dem Oberbegriff des Hauptanspruchs.

Eine Übersicht von Grenzstromsonden ist in den folgenden Artikeln, die als Stand der Technik zugrundegelegt werden, angegeben: "Characteristics of Limiting Current-Type Oxygen Sensor", Electrochemical Science and Technology, 1987, Band 137, Nr.10, Seiten 2430 bis 2435 und "Elektrochemische Grenzstromsensoren für Partialdruckmessungen", Bericht der Deutschen Bunsengesellschaft, VCH Weinheim, 1988, 0005-9021/88/ 1111-1250, Seiten 1250 bis 1257.

Als Stand der Technik wird auch das Dokument EP-A-0 408 039 genannt, des ferner offenbart die Verwendung eines porösen Festelektrolyten als Diffusionsbarriere offenbart.

Grenzstromsonden oder -sensoren werden bei zahlreichen Anwendungen wegen ihrer höheren Genauigkeit potentiometrischen Sonden vorgezogen. Allerdings benötigen sie im Gegensatz zu den potentiometrischen Sonden eine Diffusionsbarriere, da sich sonst nicht der dem Partialdruck proportionale Grenzstrom einstellt. Das erzielbare Grenzstromplateau und dessen Proportionalität zum Partialdruck sowie auch die Temperaturstabilität und Reproduzierbarkeit der Meßergebnisse hängen stark von der Auslegung der Diffusionsbarriere ab.

Es gibt grundsätzlich zwei verschiedene Diffusionsbarrieretypen, die Hohlraumbarrieren mit Loch-, Kanal- oder Diffusionsspalt und poröse Schichtenbarrieren, wobei aus den obigen Schriften hervorgeht, daß poröse Schichtenbarrieren den Hohlraumbarrieren vorzuziehen sind, welche neben dem Nachteil einer geringeren Kompaktheit und der fehlenden Möglichkeit der Herstellung in rationellen'Dickschichtverfahren bzw. Mikrotechnologie auch eine schlechtere Temperaturkonstanz der Sonde sowie eine geringere Ansprechgeschwindigkeit bedingen. Darüberhinaus bereiten auch die dichte Anbringung der Hohlraumabdeckung und der darin einzuarbeitende Gaskanal fertigungstechnische Probleme.

Neben Sonden mit Permeationsmembranen aus Polymeren, deren Selektivität gegenüber den Meßgasen nicht so gut ist, werden poröse keramische Schichten und auch beispielsweise Schichten aus $MgO*Al_2O_3$ als Diffusisionsbarrieren verwendet. Außer Finger-Grenzstromsonden sind hierzu insbesondere flache Sonden vorgeschlagen worden, bei denen auf den Festionenleiter auf zwei Seiten bedeckenden Elektroden pöröse Schichten u.a. in einem Plasmaverfahren aufgebracht wurden. Bei Fingersonden befindet sich eine poröse Diffusionschicht auf der äußeren Elektrode. Um die z.B. im Fall von $ZrO_2$-Elektrolyten erforderliche Arbeitstemperatur von 700 °C zu erzielen, sind Heizelemente erforderlich, die u.a. bereits in Form eines durch Siebdruck ausgebildeten Heizleiters vorgesehen werden, der jedoch nicht direkt auf dem Festionenleiter angebracht werden kann.

Ferner ist eine Grenzstrom-Meßsonde gemäß dem Oberbegriff des Hauptanspruchs zur Messung des Partialdrucks von Sauerstoff bekannt (DE 3921 185 Al). Von Nachteil bei dieser bekannten Grenzstrom-Meßsonde ist die Tatsache, daß die zwischen der Schicht und dem Festionenleiter vorgesehene eine Elektrode, wenngleich in geringem Maße, so doch meßbar, dem Sauerstoff ausgesetzt ist, wodurch zwar die angestrebte schnelle Ansprechzeit qualitativ erreicht werden mag, quantitativ ein unzutreffendes Meßergebnis erhalten wird. Außerdem besteht die Möglichkeit, daß - je nach Dicke der vorstehend erwähnten Elektrode - auch molekularer Sauerstoff in das von der anderen Seite des Festionenleiters vorgesehene Substrat gelangen kann, wodurch ebenfalls Verfälschungen des Meßergebnisses zu erwarten sind.

Der Erfindung liegt nun die Aufgabe zugrunde, eine Grenzstromsonde gemäß dem Oberbegriff des Hauptanspruch zu schaffen, die gegenüber den bekannten Grenzstromsonden weiter verbessert ist.

Diese Aufgabe wird durch den Gegenstand des Hauptanspruchs gelöst. Danach wird durch eine technisch einfach zu realisierende Maßnahme nämlich einer für die Meßgase undurchlässigen Schicht auf der einen der beiden Elektroden die Möglichkeit geschaffen, den Festionenleiter gleichzeitig als ionerleitendes Medium und als Diffusionsbarriere zu verwenden.

Die Porengröße, Dichte und Dicke des Festionenleiters lassen sich, wenn sie nicht von vornherein bereits für die Funktion als Diffusionsbarriere geeignet sind, so vorgeben bzw. durch Maßnahmen wie Sintern unter Zugabe von Porenbildnern (Amoniumcarbonat) beeinflussen, daß die Wirkung der Diffusionsbarriere dazu führt, daß der zu messende Strom nur vom Konzentrationsgradienten vor der Meßelektrode und damit von der Meßgaskonzentration bestimmt wird. Die erfindungsgemäße Sonde ist nicht nur sehr kompakt herstellbar, sondern erfordert im Gegensatz zu den bekannten Sonden mit zusätzlicher, der Meßelektrode vorzuschaltender poröser Schicht weniger Arbeitsschritte. So kann von im Handel erhältlichen gasdichten Substratschichten ausgegangen werden, auf denen im Siebdruckverfahren mit nur drei Drucken anstelle von vier eine fertige Sonde hergestellt wird.

Zur Herstellung der erfindungsgemäßen, in der Dickschichttechnik herstellbaren Sonde benötigt man im Gegensatz zu Sonden mit Hohlraumbarriere keinen Formkörper. Als zusätzlicher Vorteil des möglichen Dickschichttechnik kommt hinzu, daß kein Kleber benötigt wird. Ein weiterer Vorteil besteht darin, daß ohne zusätzliche Isolationsschichten auf der Unterseite der elektrisch mehrtlertenden Substratschicht ein Heizleiter insbesondere auch durch rationelle Verfahren wie Siebdrucktechnik ausbildbar ist, wie dies für viele Sonden erforderlich ist. Die Substratschicht besteht z.B. aus einer gasdichten Keramik wie $Al_2O_3$. Der Heizer ist damit gut und sehr nahe am Festionenleites plazierbar, woraus eine Energieersparnis für den Heizbetrieb resultiert.

Neben der Ausbildung in Form eines planaren Senors ist es auch möglich, die erfindungsgemäße Sonde fingerförmig auszubilden, wobei die gasundurchlässige Schicht z.B. auf der inneren Elektrode angebracht ist, so daß diese als Meßelektrode für das von außen durch die Festionenleiterschicht diffundierende Meßgas wirkt. Dabei ist gegenüber dem Stand der Technik, bei dem die Gegenelektrode, über der sich die nun eingesparte poröse Diffusionsschicht befand, als Meßelektrode wirkte, die Funktion der Elektroden vertauscht.

Zwechmäßige Ausgestaltungen und Weiterbildungen sind im den unteransprüchen gekennzeichnet.

Im folgenden wird die Erfindung anhand der Zeichnungen näher erläutert in der

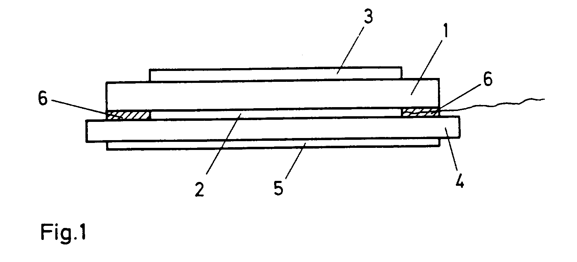

Fig. 1 ein Ausführungsbeispiel der erfindungsgemäßen Grenzstromsonde, die in konventioneller Keramiktechnik (Tabletten) hergestellt ist, zeigt.

In der Figur ist ein planarer Festionenleiter oder Festelektrolyt durch die Bezugszahl 1 angezeigt. Seine Ober- und Unterseite tragen eine Elektrode 2 bzw. 3. Unterhalb der bedeckten Elektrode 2 ist eine für das Meßgas undurchlässige Schicht 4 als elektrisch isolierendes Substrat angeordnet, auf der oder in deren Unterseite eine Heizvorrichtung 5 vorgesehen ist. Die an eine Gleichspannungsquelle und Meßinstrumente zur Strom-Spannungsmessung mit nachfolgender Auswerteinheit (sämtlich nicht dargestellt und prinzipiell wie beim Stand der Technik ausführbar) angeschlossenen Zuleitungen zu den Elektroden sind nur angedeutet. In Fig.1 sind die Zuleitungen durch die den Festionenleiter 1 und das Substrat 4 miteinander verbindende Klebestellen 6 geführt.

Die Elektroden 2,3 bestehen je nach Meßgas und verwendetem Festionenleiter sowie der zu erbringenden katalytischen Unterstützung der anodischen oder kathodischen Reaktionen und einer beabsichtigten Steigerung der Selektivität durch das Elektrodenpotential (so werden bei Gold in bestimmten Potentialbereichen nur bestimmte Gasbestandteile oxidiert) beispielsweise aus Platin, Gold, Silber, Kohlenstoffarten oder auch z.B. Kobalt-Phthalocyanin. Gängige Aufbringungs-verfahren sind Dickschicht-, Sputter- oder Aufdampfverfahren. Das Festionenleitermaterial richtet sich danach, ob für das Meßgas eine Kationen- oder Anionenleitung in Frage kommt. Neben dem für die Sauerstoffpartialdruckmessung gebräuchlichen, mit $Y_2O_3$ stabilisierten $ZrO_2$ sind eine Reihe von Materialien wie $Sb_2O_5*5,4\,H_2O$ und Na-β-Alumina für andere Meßgase möglich.

Die als Meßelektrode wirkende Elektrode 2, der der gleichzeitig als Diffusionsbarriere wirkende Festionenleiter 1 vorgeschaltet ist, wird so vorgespannt, daß die zur Erzeugung der Ionen erforderliche Oxidation oder Reduktion, d.h. die elektrochemische Reaktion von der Gasphase in den Festkörper an dieser Elektrode stattfindet. Im Fall der $O_2$-Messung mit $ZrO_2$ ist die Elektrode 2 negativ gepolt, so daß dort die Reaktion

$$(1/2)O_2 + 2e^- \rightarrow O^{2-}$$

an der Phasengrenze stattfindet. Die entstehenden Ionen bewegen sich entgegengesetzt zur Diffusionsrichtung durch den Festionenleiter 1 auf die positiv vorgespannte Gegenelektrode 3 zu, an der der Austritt aus dem Festkörper in die Gasphase erfolgt.

Bei einem Kationen leitenden Festionenleiter wie Na-β-Al$_2$O$_3$ zur Partialdruckmessung von Natriumgas oder Protonenleiter ($Sb_2O_5*5,4\,H_2O$) zur Messung des Partialdruckes von $H_2$ wäre die Vorspannung entsprechend umzukehren.

$$H_2 \rightarrow 2H^+ + 2e^-$$

Neben Na-β-Alumina kann z.B. auch Nasicon als Festionenleiter 1 für das Meßgas Natrium eingesetzt werden. Beim Meßgas Kalium ist ferner bei positiver gepolter Meßelektrode K-β-Al$_2$O$_3$ als Festelektrolyt verwendbar. Somit ist gegenüber dem Stand der Technik, der auf beiden oder zumindest auf einer der Elektroden noch eine zusätzliche poröse Diffusionsschicht vorsieht, diese keramische Schicht eingespart.

Für die Auswahl und Herstellung bzw. Nachbehandlung des Festionenleiters mit den beiden Funktionen, sind unterschiedliche Aspekte maßgebend. So ist prinzipiell durch eine geringe Porengröße die Bedingung für eine Knudsendiffusion gegenüber einer Gasphasendiffusion bei größeren, über der mittleren freien Weglänge der Gasmoleküle liegenden Porendurchmessern, anzustreben. Es können sich jedoch auch Grenzfälle zwischen Gasphasen- und Knudsendiffusion als vorteilhaft erweisen, bei denen sich z.B. die Temperaturabhängigkeiten beider Mechanismen kompensieren. Neben dem Diffusionswiderstand ist schließlich auch die vorhandene Aktivitätskapazität der Elektroden für die Proportionalität der Meßergebnisse im jeweiligen zu erfassenden Konzentrationsbereich entscheidend. Somit ist es nicht möglich, allgemein gültige Werte für die Porengröße und Dichte des Festionenleiters anzugeben, sondern diese und auch die anderen Eigenschaften dieser Schicht müssen für die spezielle Sondenaufgabe und auch im Hinblick auf die Elektroden stets individuell optimiert werden.

Die in der Figur dargestellte Sonde ist in Konventionelle Technologie herstellbar. Auf den in konventioneller keramischer Technologie hergestellten Festkörperelelktrolyt 1 in z.B. Tablettenform werden die beiden Elektroden 2, 3 aufgebracht (in Dick- oder Dünnschichttechnik) und die entsprechenden Elektrodenableitungen angebracht. Parallel kann der Heizer 5 z.B. in Dickschichttechnik auf ein gasdichtes nicht leitenden Substrat 4 aufgebracht werden. Anschließend werden beide Teile, der Festelektrolyt mit Elektroden sowie das Substrat mit Heizer, wie in Fig. 1 abgebildet, durch einen keramischen Kleber 6 miteinander verbunden.

**Patentansprüche**

1. Grenzstrom-Meßsonde zur Messung des Partialdrucks von Gasen, mit einer Schicht (4) mit einem auf deren einer Seite befindlichen Festionenleiter (1), der auf seiner Ober- und Unterseite mit je einer Elektrode (2, 3) versehen ist, wobei der Festionenleiter (1) porös als Diffusionsbarriere für den Sauerstoff mit einer zu dessen Diffusionsrichtung entgegengesetzten Richtung der Wanderung der Sauerstoffionen ausgebildet ist,

   **dadurch gekennzeichnet,**

   daß die Schicht (4) gasundurchlässig ausgebildet ist und

   daß die an dieser Schicht (4) angrenzende Elektrode (2) als allseits abgedeckte, abgeschlossene Meßelektrode (2) ausgebildet ist.

2. Grenzstrom-Meßsonde nach Anspruch 1, dadurch gekennzeichnet, daß die Meßelektrode (2) als von der Schicht (4), dem Festionenleiter (1) sowie bei der Herstellung in konventioneller Keramiktechnologie von einem keramischen Kleber (6) abgeschlossen ausgebildet ist.

3. Grenzstrom-Meßsonde nach einem der Ansprüche 1 bis 2, dadurch gekennzeichnet, daß die Schicht (4) als elektrisch nichtleitendes Substrat ausgebildet ist.

4. Grenzstromsonde nach einem der Ansprüche 1 bis 3, dadurch gekennzeichnet, daß sich in der oder auf der anderen Seite der Schicht (4) eine Heizvorrichtung (5) befindet.

**Claims**

1. A limiting-current measuring probe for measuring the partial pressure of gases, having a layer (4) with a bound-ion conductor (4) which is disposed on one side thereof and which is provided on its top and bottom sides with respective electrodes (2, 3), wherein the bound-ion conductor (1) is porously formed as a diffusion barrier for oxygen with a direction of oxygen ion migration which is opposite to its diffusion direction, characterised in that

   the layer (4) is gas-permeable, and
   the electrode (2) adjoining said layer (4) is in the form of an enclosed measuring electrode (2) which is covered on all sides.

2. A limiting-current measuring probe according to claim 1 characterised in that the measuring electrode (2) is in the form of being enclosed by the layer (4), the bound-ion conductor (1) and, in manufacture by conventional ceramic technology, by a ceramic adhesive (6) (Figure 1).

3. A limiting-current measuring probe according to one of claims 1 and 2 characterised in that the layer (4) is in the form of an electrically non-conducting substrate.

4. A limiting-current probe according to one of claims 1 to 3 characterised in that a heating means (5) is disposed in or on the other side of the layer (4).

**Revendications**

1. Sonde de mesure à courant limite, destinée à mesurer la pression partielle de gaz, comportant une couche (4), avec un conducteur d'ions fixes (1) se trouvant sur l'une de ses faces, conducteur qui, tant sur sa face supérieure que sur sa face inférieure, est pourvu d'une électrode (2, 3) le conducteur d'ions fixes (1) étant réalisé d'une manière poreuse sous forme d'une barrière de diffusion pour l'oxygène, avec pour la migration des ions oxygène une direction opposée à la direction de sa diffusion, **CARACTERISEE** en ce que :

   - la couche (4) est réalisée de façon à être imperméable aux gaz, et
   - l'électrode (2) adjacente à cette couche (4), est conçue comme une électrode de mesure (2) isolée, recouverte de tous les côtés.

2. Sonde de mesure à courant limite selon la revendication 1, **caractérisée** en ce que l'électrode de mesure (2) est conçue comme isolées par la couche (4), par le conducteur d'ions fixes (1), et aussi, lors d'une fabrication par une technologie classique des céramiques, par un adhésif céramique (6) (figure 1).

3. Sonde de mesure à courant limite selon la revendication 1 ou 2, **caractérisée** en ce que la couche 4 est conçue comme un substrat non conducteur de l'électricité.

4. Sonde à courant limite selon l'une des revendications 1 à 3, **caractérisée** en ce qu'un dispositif de chauffage (5) se trouve dans l'une ou l'autre face de la couche (4).

Fig.1